# EUROPEAN PATENT APPLICATION

(11) **EP 2 863 297 A1**
(43) Date of publication of application: **22.04.2015**
(21) Application number: 12879211.6
(22) Date of filing: 18.06.2012
(51) Int. Cl.: G06F 3/048

(54) **TERMINAL AND INTERFACE OPERATION MANAGEMENT METHOD**

(71) Applicant: Yulong Computer Telecommunication Technologies (Shenzhen) Co., Ltd., Guangdong 518057 (CN)
(72) Inventor: CHEN, Lanbo, Shenzhen Guangdong 518057 (CN)
(74) Representative: Michalski Hüttermann & Partner Patentanwälte mbB
(86) International application number: PCT/CN2012/077090
(87) International publication number: WO 2013/189014

(57) **Abstract**

The present invention provides a terminal, including: a scaling processing unit, configured to perform scaling processing on a current interface towards an appointed scaling direction according to a received scaling instruction. Correspondingly, the present invention further provides an interface operation management method. By means of the technical solutions of the present invention, scaling processing may be performed on the operation interface of the terminal, in order to facilitate a user to operate the contents of the interface by a single hand.

## Description

### Field of the Invention

The present invention relates to the technical field of mobile communications, and particularly relates to a terminal and an interface operation management method.

### Background of the Invention

When using mobile terminals, for example, when operating mobile phones, most users like to hold the mobile phones on single hands and use the thumbs of the same hands to operate the screens. However, with the continuous development of the field of mobile communications, in order to bring better operation and display effect experience to the users, the screens of the mobile phones are bigger and bigger, under most conditions, when holding the mobile phone on the single hand, the thumb could not cover all ranges of the screen of the mobile phone, thus one hand needs to hold the mobile phone and the other hand operates on the screen. This results in that, in an operation process, the user must simultaneously use double hands while failing to operate the terminal by the single hand.

Therefore, a new interface operation management technology is needed to perform scaling processing on the operation interface of the terminal, so as to facilitate the user to operate the contents of the interface by the single hand.

### Summary of the Invention

Based on the above-mentioned problems, the present invention provides a new interface operation management technology, which may be used for performing scaling processing on the operation interface of a terminal, so as to facilitate a user to operate the contents of the interface by a single hand.

To this end, the present invention provides a terminal, including: a scaling processing unit, configured to perform scaling processing on a current interface towards an appointed scaling direction according to a received scaling instruction. In the technical solution, when the operation interface of the terminal is large, the user could not hold or operate the terminal by the single hand, particularly when holding the terminal on the single hand and operating the same through the thumb, the interface may be scaled within a range capable of being operated by the thumb, in order to achieve single-handed holding and operation. In order to facilitate the operation of the user, under a preferable solution, the scaling direction of the operation interface should be the holding hand direction of the user, for example, when the user holds the terminal on the right hand, the interface is scaled towards the lower right of the screen.

In the above-mentioned technical solution, preferably, the terminal further includes: an interface judging unit, configured to judge whether the current interface is a preset scalable interface, if so, the scaling processing unit performs the scaling processing, if not, no processing is performed.

In the technical solution, different interfaces may be preset by a manufacturer or the user, such that some interfaces needing to be scaled may be scaled and other interfaces could not be scaled, in order to prevent misoperation from affecting the operation experience of the user.

In the above-mentioned technical solution, preferably, the scaling instruction corresponds to a sensed single-point touch track, then the terminal further includes: a touch sensing unit, configured to generate the single-point touch track according to a sensed touch action; the scaling processing unit is further configured to perform the scaling processing on the current interface under the condition that the single-point touch track is matched with a preset gesture shape.

In the technical solution, when using the holding hand to operate the terminal interface, since the user is used to using the thumb of the hand to operate, when scaling the interface, it is the best for the user to draw the single-point touch track through the thumb to achieve the scaling processing of the interface.

In the above-mentioned technical solution, preferably, the terminal further includes: an operating hand judging unit, configured to judge whether the operating hand drawing the single-point touch track is the left hand or the right hand of the user; a direction determining unit, configured to determine the scaling direction according to the judging result of the operating hand judging unit.

In the technical solution, when the user holds the terminal on the single hand and uses the thumb of the hand to operate, an arc surface taking the held corner of the terminal as a circle center will be generally formed, this is the coverage capable of being operated by the thumb, and after the interface is scaled to the arc surface, the single-handed operation of the user is facilitated. Thus, by judging the holding hand of the user, the operation interface is convenient to be scaled within the operation coverage of the thumb of the holding hand, in order to achieve the single-handed holding and operation of the user.

In the above-mentioned technical solution, preferably, the operating hand judging unit includes: a parameter detecting subunit, configured to detect dynamic parameters on the surrounding of the terminal through a detecting device arranged on the terminal; a judging subunit, configured to judge the operating hand according to the dynamic parameters.

In the technical solution, the dynamic parameters herein include, for example, temperature, humidity, brightness and the like, by arranging corresponding devices on the front surface, the side surface, the back surface and the like of the terminal, such as a temperature sensor, a humidity sensor, a brightness sensor, a distance sensor and the like, the above-mentioned dynamic parameters may be acquired in real time, so as to judge the current holding hand or operating hand of the user.

In the above-mentioned technical solution, preferably, the operating hand judging unit includes: a display subunit, configured to display a selection menu on the current interface after the touch sensing unit detects the single-point touch track; a judging subunit, configured to judge the operating hand according to a received selection command for the selection menu.

In the technical solution, a corresponding inquiry menu may also be activated by the single-point touch track of the user, and then, the user clicks to select a corresponding menu option to determine the current operating hand.

In the above-mentioned technical solution, preferably, the operating hand judging unit includes: a moving direction detecting subunit, configured to detect the moving direction of the single-point touch track; a judging subunit, configured to judge the operating hand according to the moving direction.

In the technical solution, the user will generally express his own operation intention on a corresponding operation action, for example, when hoping to scale the operation interface along a certain direction, the user will generally draw the single-point touch track towards the direction, when hoping to use the thumb of the operating hand to operate, the user will generally move the interface towards the operation coverage of the thumb, thus by detecting the moving direction of the single-point touch track, the operating hand of the user may be judged.

In the above-mentioned technical solution, preferably, the operating hand judging unit further includes: an end point acquiring subunit, configured to acquire the starting point position and the ending point position of the single-point touch track; the judging subunit is further configured to judge the moving direction according to the starting point position and the ending point position.

In the technical solution, when the user draws the single-point touch track, the track is generally substandard and will be subjected to such conditions as bending and the like, thus causing the terminal to fail to identify the operation intention of the user; however, the general operation direction of the user is generally correct, thus as long as the starting point and the ending point of the single-point touch track are acquired, the general direction of the track may be known, to judge the operation intention and the operating hand of the user.

In the above-mentioned technical solution, preferably, the scaling processing unit includes: an end point processing subunit, configured to fix a bottom end point located in the scaling direction on the current interface; an interface processing subunit, configured to scale the current interface towards the position where the bottom end point is located.

In the technical solution, the shape of the terminal interface and the shape of the screen are rectangles, each of which includes four end points, when holding the terminal, the user often holds one end point therein, the end point is the bottom end point, and the operation interface may be scaled within the operation coverage of the thumb of the operating hand by simply scaling the same towards the bottom end point.

In the above-mentioned technical solution, preferably, a preset scaling degree is stored in the terminal, and the interface processing subunit is configured to perform the scaling processing on the current interface according to the preset scaling degree. In the technical solution, once the user draws a single-point touch track, it is equal to send the scaling command for one time, and then, under one condition, the user may only send the scaling command for one time, for example, may only scale the operation interface from an original size to 50%, or scale in the reverse direction; under another condition, the user may send the scaling command for multiple times, for example after sending the scaling command at each time, the operation interface will be scaled to 50% by taking the size of the current interface as reference, or be scaled in the reverse direction.

In the above-mentioned technical solution, preferably, there are multiple preset scaling degrees, and the multiple preset scaling degrees are mutually correlated, then the scaling processing unit further includes: a real-time proportion acquiring subunit, configured to acquire the real-time scaling degree of the current interface; the interface processing subunit is further configured to select the preset scaling degree correlated with the real-time scaling degree according to the real-time scaling degree of the current interface and perform the scaling processing on the current interface. In the technical solution, when sending the scaling command at each time, the operation interface of the terminal is subjected to once scaling processing, for example, it is preset to be scaled to 75% at the first time, scaled to 50% at the second time and scaled to 30% at the third time, and the like, if the size of the current interface of the operation interface is 50% of the original size, the current interface is scaled to 30% or 75% when being scaled again.

In the above-mentioned technical solution, preferably, the scaling processing unit further includes: a moving distance detecting subunit, configured to detect the moving distance of the single-point touch track; the interface processing subunit is further configured to perform the scaling processing on the current interface according to the moving distance, wherein the scaling degree of the current interface is directly proportional to the moving distance.

In the technical solution, the longer the moving distance of the single-point touch track is, the larger the proportion at which the user hopes to perform the scaling processing on the operation interface is. The scaling degree may be correlated with the moving distance to achieve limitless scaling, in order to improve the user experience.

In the above-mentioned technical solution, preferably, the scaling processing unit further includes: a display distance detecting subunit, configured to detect the display distance between the display contents of the current interface and the bottom end point; the interface processing subunit is further configured to set the scaling degree of the display contents according to the display distance.

In the above-mentioned technical solution, preferably, when the interface processing subunit sets the scaling degree, the scaling degree is inversely proportional to the display distance.

In the technical solution, it is possible to make the display distance to the bottom end point be inversely proportional to the scaling degree of the corresponding display contents, so that the content at the edge of the coverage of the operating hand is always the maximum, to facilitate the operation of the user, since the user does not need to operate the content closer to the bottom end point temporarily, the content is scaled smaller, thus more contents may be held within the coverage of the operating hand, and the user is easier to move the contents beyond the coverage into the coverage.

In the above-mentioned technical solution, preferably, the terminal further includes: an area setting unit, configured to set a single-handed touch area on the current interface; and the scaling processing unit is further configured to perform the scaling processing on the display contents within the single-handed touch area in the current interface.

In the above-mentioned technical solution, preferably, the display contents include out-of-area contents beyond the single-handed touch area and in-area contents within the single-handed touch area, and then, the scaling processing unit is further configured to perform the scaling processing on the part of the out-of-area contents entering the single-handed touch area, under the condition that the out-of-area contents enter the single-handed touch area with the scaling of the in-area contents. In the technical solution, all display contents may be scaled down, or merely the contents within the coverage may be scaled down, when the contents within the coverage are scaled down, corresponding contents beyond the coverage enter the coverage and will be scaled down according to the down-scaling rule. By adopting the solution, the original sizes of the contents beyond the coverage may be kept for convenience in viewing and reading.

In the above-mentioned technical solution, preferably, the area setting unit includes: a track detecting subunit, configured to detect a boundary track drawn on the current interface of the terminal at a setting state; an area processing subunit, configured to set the part below the boundary track on the current interface as the single-handed touch area.

In the technical solution, the user may set the size of the single-handed touch area by himself, specifically, when the terminal enters the corresponding setting state, a boundary track is drawn on the terminal interface, if the boundary track is a closed shape, for example, a circle, the circle is set as the single-handed touch area; if the boundary track is a line segment crossing with the left and right sides of the terminal screen, an area formed by the line segment, the two crossed side edges and a third side edge below the line segment is set as the single-handed touch area.

In the above-mentioned technical solution, preferably, the area setting unit includes: a touch point acquiring subunit, configured to acquire the first touch point of the single-point touch track when detecting the single-point touch track; an area processing subunit, configured to set an arc surface formed on the current interface as the single-handed touch area, wherein the bottom end point is used as a circle center, and the connecting line segment of the first touch point and the bottom end point is used as a radius.

In the technical solution, the user may set the single-handed touch area according to the operation coverage area corresponding to the thumb of his own operating hand, for facilitating the operation of the user.

In the above-mentioned technical solution, preferably, the terminal further includes: a widget acquiring unit, configured to acquire an operation widget on the current interface after detecting the single-point touch track; a widget arranging unit, configured to rearrange the operation widget in the single-handed touch area.

In the technical solution, since the shape of the operation interface could not be completely matched with the shape of the single-handed touch area, the scaled operation interface could not fill all display area of the single-handed touch area, such that the display interface of the scaled operation interface is too small, and the display area of the single-handed touch area is not completely utilized; by rearranging the operation widget in the single-handed touch area, the display area of the single-handed touch area may be used as much as possible, thus increasing the display area of the operation widget to facilitate the user operation and avoid wrong click.

In the above-mentioned technical solution, preferably, the scaling processing unit is further configured to recover the current interface to the original display proportion according to a received recovery command after completing the scaling processing of the current interface.

In the technical solution, after the operation is completed, the display proportion of the current interface will be recovered.

In the above-mentioned technical solution, preferably, the process of the terminal for generating the recovery command includes at least one of the following or the combination thereof: an operation command is not received within a preset time threshold of the current interface, the operation widget on the current interface receives the operation command, and an icon displayed on the current interface is triggered.

According to another aspect of the present invention, an interface operation management method is further provided, including: performing, by a terminal, scaling processing on a current interface towards an appointed scaling direction according to a received scaling instruction.

In the technical solution, when the operation interface of the terminal is large, the user could not hold or operate the terminal by the single hand, particularly when holding the terminal on the single hand and operating the same through the thumb, the interface may be scaled within a range capable of being operated by the thumb, in order to achieve single-handed holding and operation. In order to facilitate the operation of the user, under a preferable solution, the scaling direction of the operation interface should be the holding hand direction of the user, for example, when the user holds the terminal on the right hand, the interface is scaled towards the lower right of the screen.

In the above-mentioned technical solution, preferably, the interface operation management method further includes: judging whether the current interface is a preset scalable interface, if so, performing the scaling processing, if not, performing no processing.

In the technical solution, different interfaces may be preset by a manufacturer or the user, such that some interfaces needing to be scaled may be scaled and other interfaces could not be scaled, in order to prevent misoperation from affecting the operation experience of the user.

In the above-mentioned technical solution, preferably, the interface operation management method further includes: the scaling instruction corresponds to a single-point touch track sensed by the terminal; if the terminal detects the single-point touch track matched with a preset gesture shape, performing the scaling processing on the current interface.

In the technical solution, when using the holding hand to operate the terminal interface, since the user is used to using the thumb of the hand to operate, when scaling the interface, it is the best for the user to draw the single-point touch track through the thumb to achieve the scaling processing of the interface.

In the above-mentioned technical solution, preferably, the interface operation management method further includes: judging whether the operating hand drawing the single-point touch track is the left hand or the right hand of the user, and determining the scaling direction according to the judging result.

In the technical solution, when the user holds the terminal on the single hand and uses the thumb of the hand to operate, an arc surface taking the held corner of the terminal as a circle center will be generally formed, this is the coverage capable of being operated by the thumb, and after the interface is scaled to the arc surface, the single-handed operation of the user is facilitated. Thus, by judging the holding hand of the user, the operation interface is convenient to be scaled within the operation coverage of the thumb of the holding hand, in order to achieve the single-handed holding and operation of the user.

In the above-mentioned technical solution, preferably, the process of judging the operating hand includes: detecting dynamic parameters on the surrounding of the terminal through a detecting device arranged on the terminal, and judging according to the dynamic parameters.

In the technical solution, the dynamic parameters herein include, for example, temperature, humidity, brightness and the like, by arranging corresponding devices on the front surface, the side surface, the back surface and the like of the terminal, such as a temperature sensor, a humidity sensor, a brightness sensor, a distance sensor and the like, the above-mentioned dynamic parameters may be acquired in real time, so as to judge the current holding hand or operating hand of the user.

In the above-mentioned technical solution, preferably, the process of judging the operating hand includes: displaying a selection menu on the current interface after detecting the single-point touch track, and judging according to a received selection command.

In the technical solution, a corresponding inquiry menu may also be activated by the single-point touch track of the user, and then, the user clicks to select a corresponding menu option to determine the current operating hand.

In the above-mentioned technical solution, preferably, the process of judging the operating hand includes: detecting the moving direction of the single-point touch track, and judging according to the moving direction.

In the technical solution, the user will generally express his own operation intention on a corresponding operation action, for example, when hoping to scale the operation interface along a certain direction, the user will generally draw the single-point touch track towards the direction, when hoping to use the thumb of the operating hand to operate, the user will generally move the interface towards the operation coverage of the thumb, thus by detecting the moving direction of the single-point touch track, the operating hand of the user may be judged.

In the above-mentioned technical solution, preferably, the moving direction is acquired according to the starting point position and the ending point position of the single-point touch track.

In the technical solution, when the user draws the single-point touch track, the track is generally substandard and will be subjected to such conditions as bending and the like, thus causing the terminal to fail to identify the operation intention of the user; however, the general operation direction of the user is generally correct, thus as long as the starting point and the ending point of the single-point touch track are acquired, the general direction of the track may be known, to judge the operation intention and the operating hand of the user.

In the above-mentioned technical solution, preferably, the process of performing the scaling processing on the current interface includes: fixing a bottom end point located in the scaling direction on the current interface, and scaling the current interface towards the position where the bottom end point is located.

In the technical solution, the shape of the terminal interface and the shape of the screen are rectangles, each of which includes four end points, when holding the terminal, the user often holds one end point therein, the end point is the bottom end point, and the operation interface may be scaled within the operation coverage of the thumb of the operating hand by simply scaling the same towards the bottom end point.

In the above-mentioned technical solution, preferably, a preset scaling degree is stored in the terminal, and the scaling processing is performed on the current interface according to the preset scaling degree.

In the technical solution, once the user draws a single-point touch track, it is equal to send the scaling command for one time, and then, under one condition, the user may only send the scaling command for one time, for example, may only scale the operation interface from an original size to 50%, or scale in the reverse direction; under another condition, the user may send the scaling command for multiple times, for example after sending the scaling command at each time, the operation interface will be scaled to 50% by taking the size of the current interface as reference, or be scaled in the reverse direction.

In the above-mentioned technical solution, preferably, there are multiple preset scaling degrees, and the multiple preset scaling degrees are mutually correlated, then the preset scaling degree correlated with the real-time scaling degree is selected according to the real-time scaling degree of the current interface to perform the scaling processing on the current interface.

In the technical solution, when sending the scaling command at each time, the operation interface of the terminal is subjected to once scaling processing, for example, it is preset to be scaled to 75% at the first time, scaled to 50% at the second time and scaled to 30% at the third time, and the like, if the size of the current interface of the operation interface is 50% of the original size, the current interface is scaled to 30% or 75% when being scaled again.

In the above-mentioned technical solution, preferably, the moving distance of the single-point touch track is detected, and the scaling processing is performed on the current interface according to the moving distance, wherein the scaling degree of the current interface is directly proportional to the moving distance.

In the technical solution, the longer the moving distance of the single-point touch track is, the larger the proportion at which the user hopes to perform the scaling processing on the operation interface is. The scaling degree may be correlated with the moving distance to achieve limitless scaling, in order to improve the user experience.

In the above-mentioned technical solution, preferably, the interface operation management method further includes: detecting the display distance between the display contents of the current interface and the bottom end point, and setting the scaling degree of the display contents according to the display distance.

In the above-mentioned technical solution, preferably, the interface operation management method further includes: the scaling degree is inversely proportional to the display distance.

In the technical solution, it is possible to make the display distance to the bottom end point be inversely proportional to the scaling degree of the corresponding display contents, so that the content at the edge of the coverage of the operating hand is always the maximum, to facilitate the operation of the user, since the user does not need to operate the content closer to the bottom end point temporarily, the content is scaled smaller, thus more contents may be held within the coverage of the operating hand, and the user is easier to move the contents beyond the coverage into the coverage.

In the above-mentioned technical solution, preferably, a single-handed touch area is set on the current interface, and the scaling processing is performed on the display contents within the single-handed touch area in the current interface.

In the above-mentioned technical solution, preferably, the display contents include out-of-area contents beyond the single-handed touch area and in-area contents within the single-handed touch area, if the out-of-area contents enter the single-handed touch area with the scaling of the in-area contents, the scaling processing is performed on the part of the out-of-area contents entering the single-handed touch area.

In the technical solution, all display contents may be scaled down, or merely the contents within the coverage may be scaled down, when the contents within the coverage are scaled down, corresponding contents beyond the coverage enter the coverage and will be scaled down according to the down-scaling rule. By adopting the solution, the original sizes of the contents beyond the coverage may be kept for convenience in viewing and reading.

In the above-mentioned technical solution, preferably, the process of setting the single-handed touch area includes: detecting a boundary track drawn on the current interface of the terminal at a setting state, and setting the part below the boundary track on the current interface as the single-handed touch area.

In the technical solution, the user may set the size of the single-handed touch area by himself, specifically, when the terminal enters the corresponding setting state, a boundary track is drawn on the terminal interface, if the boundary track is a closed shape, for example, a circle, the circle is set as the single-handed touch area; if the boundary track is a line segment crossing with the left and right sides of the terminal screen, an area formed by the line segment, the two crossed side edges and a third side edge below the line segment is set as the single-handed touch area.

In the above-mentioned technical solution, preferably, the process of setting the single-handed touch area includes: acquiring the first touch point of the single-point touch track when detecting the single-handed touch track; setting an arc surface formed on the current interface as the single-handed touch area, wherein the bottom end point is used as a circle center, and the connecting line segment of the first touch point and the bottom end point is used as a radius.

In the technical solution, the user may set the single-handed touch area according to the operation coverage area corresponding to the thumb of his own operating hand, for facilitating the operation of the user.

In the above-mentioned technical solution, preferably, the interface operation management method further includes: after detecting the single-point touch track, rearranging an operation widget on the current interface in the single-handed touch area.

In the technical solution, since the shape of the operation interface could not be completely matched with the shape of the single-handed touch area, the scaled operation interface could not fill all display area of the single-handed touch area, such that the display interface of the scaled operation interface is too small, and the display area of the single-handed touch area is not completely utilized; by rearranging the operation widget in the single-handed touch area, the display area of the single-handed touch area may be used as much as possible, thus increasing the display area of the operation widget to facilitate the user operation and avoid wrong click.

In the above-mentioned technical solution, preferably, the interface operation management method further includes: after completing the scaling processing of the current interface, recovering the current interface to the original display proportion according to a received recovery command.

In the technical solution, after the operation is completed, the display proportion of the current interface will be recovered.

In the above-mentioned technical solution, preferably, the process of generating the recovery command includes at least one of the following or the combination thereof: an operation command is not received within a preset time threshold of the current interface, the operation widget on the current interface receives the operation command, and an icon displayed on the current interface is triggered.

By means of the above-mentioned technical solution, the scaling processing may be performed on the operation interface of the terminal, in order to facilitate the user to operate the contents of the interface by the single hand.

### Brief Description of the Drawings

Fig.1 shows a block diagram of a terminal according to an embodiment of the present invention;
Fig.2 shows a flowchart of an interface operation management method according to an embodiment of the present invention;
Fig.3A to Fig.3M show a schematic diagram of an operation terminal interface according to an embodiment of the present invention;
Fig.4 shows a flowchart of terminal interface operation in an embodiment of the present invention;

### Detailed Description of the Embodiments

In order to understand the above-mentioned purposes, features and advantages of the present invention more clearly, a further detailed description of the present invention will be given below in combination with accompanying drawings and specific implementations. It should be noted that, under the condition of no conflict, the embodiments and the features in the embodiments of the application may be mutually combined.

In the following description, numerous specific details are set forth to fully understand the present invention, however, the present invention may also be implemented in other manners different from the description herein, therefore, the protection scope of the present invention is not limited to the specific embodiments disclosed below.

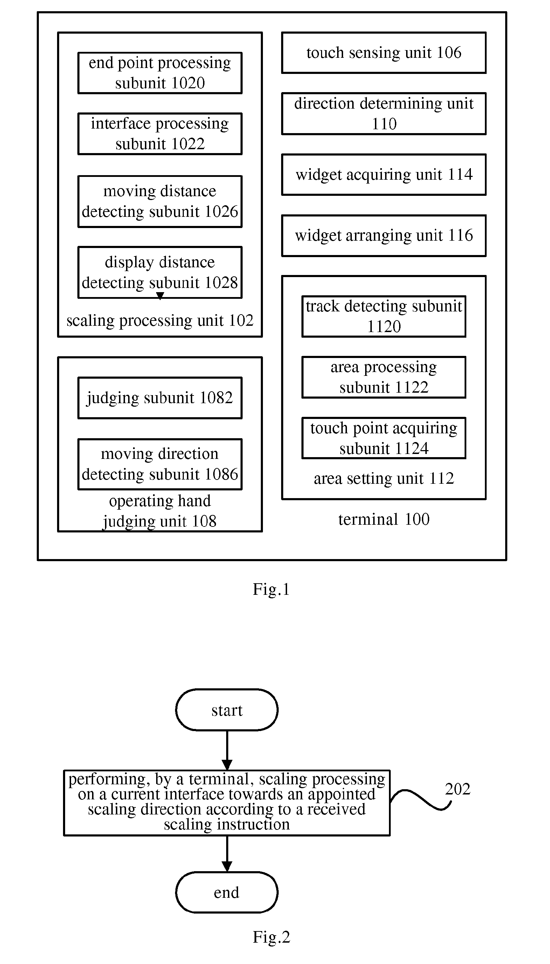

Fig.1 shows a block diagram of a terminal according to an embodiment of the present invention.

As shown in Fig.1, the terminal 100 according to the embodiment of the present invention includes: a scaling processing unit 102, configured to perform scaling processing on a current interface towards an appointed scaling direction according to a received scaling instruction.

In the technical solution, when the operation interface of the terminal 100 is large, the user could not hold or operate the terminal by the single hand, particularly when holding the terminal 100 on the single hand and operating the same through the thumb, the interface may be scaled within a range capable of being operated by the thumb, in order to achieve single-handed holding and operation. In order to facilitate the operation of the user, under a preferable solution, the scaling direction of the operation interface should be the holding hand direction of the user, for example, when the user holds the terminal on the right hand, the interface is scaled towards the lower right of the screen.

In the above-mentioned technical solution, the terminal further includes: an interface judging unit 104, configured to judge whether the current interface is a preset scalable interface, if so, the scaling processing unit 102 performs the scaling processing, if not, no processing is performed.

In the technical solution, different interfaces may be preset by a manufacturer or the user, such that some interfaces needing to be scaled may be scaled and other interfaces could not be scaled, in order to prevent misoperation from affecting the operation experience of the user.

In the above-mentioned technical solution, the scaling instruction corresponds to a sensed single-point touch track, then the terminal 100 further includes: a touch sensing unit 106, configured to generate the single-point touch track according to a sensed touch action; the scaling processing unit 102 is further configured to perform the scaling processing on the current interface under the condition that the single-point touch track is matched with a preset gesture shape.

In the technical solution, when using the holding hand to operate the terminal interface, since the user is used to using the thumb of the hand to operate, when scaling the interface, it is the best for the user to draw the single-point touch track through the thumb to achieve the scaling processing of the interface.

In the above-mentioned technical solution, the terminal further includes: an operating hand judging unit 108, configured to judge whether the operating hand drawing the single-point touch track is the left hand or the right hand of the user; a direction determining unit 110, configured to determine the scaling direction according to the judging result of the operating hand judging unit 108.

In the technical solution, when the user holds the terminal 100 on the single hand and uses the thumb of the hand to operate, an arc surface taking the held corner of the terminal 100 as a circle center will be generally formed, this is the coverage capable of being operated by the thumb, and after the interface is scaled to the arc surface, the single-handed operation of the user is facilitated. Thus, by judging the holding hand of the user, the operation interface is convenient to be scaled within the operation coverage of the thumb of the holding hand, in order to achieve the single-handed holding and operation of the user.

In the above-mentioned technical solution, the operating hand judging unit 108 includes: a parameter detecting subunit 1080, configured to detect dynamic parameters on the surrounding of the terminal 100 through a detecting device arranged on the terminal 100; a judging subunit 1082, configured to judge the operating hand according to the dynamic parameters.

In the technical solution, the dynamic parameters herein include, for example, temperature, humidity, brightness and the like, by arranging corresponding devices on the front surface, the side surface, the back surface and the like of the terminal, such as a temperature sensor, a humidity sensor, a brightness sensor, a distance sensor and the like, the above-mentioned dynamic parameters may be acquired in real time, so as to judge the current holding hand or operating hand of the user.

In the above-mentioned technical solution, the operating hand judging unit 108 includes: a display subunit 1084, configured to display a selection menu on the current interface after the touch sensing unit 106 detects the single-point touch track; a judging subunit 1082, configured to judge the operating hand according to a received selection command for the selection menu.

In the technical solution, a corresponding inquiry menu may also be activated by the single-point touch track of the user, and then, the user clicks to select a corresponding menu option to determine the current operating hand.

In the above-mentioned technical solution, the operating hand judging unit 108 includes: a moving direction detecting subunit 1086, configured to detect the moving direction of the single-point touch track; a judging subunit 1082, configured to judge the operating hand according to the moving direction.

In the technical solution, the user will generally express his own operation intention on a corresponding operation action, for example, when hoping to scale the operation interface along a certain direction, the user will generally draw the single-point touch track towards the direction, when hoping to use the thumb of the operating hand to operate, the user will generally move the interface towards the operation coverage of the thumb, thus by detecting the moving direction of the single-point touch track, the operating hand of the user may be judged.

In the above-mentioned technical solution, the operating hand judging unit 108 further includes: an end point acquiring subunit 1088, configured to acquire the starting point position and the ending point position of the single-point touch track; the judging subunit 1082 is further configured to judge the moving direction according to the starting point position and the ending point position.

In the technical solution, when the user draws the single-point touch track, the track is generally substandard and will be subjected to such conditions as bending and the like, thus causing the terminal 100 to fail to identify the operation intention of the user; however, the general operation direction of the user is generally correct, thus as long as the starting point and the ending point of the single-point touch track are acquired, the general direction of the track may be known, to judge the operation intention and the operating hand of the user.

In the above-mentioned technical solution, the scaling processing unit 102 includes: an end point processing subunit 1020, configured to fix a bottom end point located in the scaling direction on the current interface; an interface processing subunit 1022, configured to scale the current interface towards the position where the bottom end point is located.

In the technical solution, the shape of the terminal interface and the shape of the screen are rectangles, each of which includes four end points, when holding the terminal 100, the user often holds one end point therein, the end point is the bottom end point, and the operation interface may be scaled within the operation coverage of the thumb of the operating hand by simply scaling the same towards the bottom end point.

In the above-mentioned technical solution, a preset scaling degree is stored in the terminal 100, and the interface processing subunit 1022 is configured to perform the scaling processing on the current interface according to the preset scaling degree.

In the technical solution, once the user draws a single-point touch track, it is equal to send the scaling command for one time, and then, under one condition, the user may only send the scaling command for one time, for example, may only scale the operation interface from an original size to 50%, or scale in the reverse direction; under another condition, the user may send the scaling command for multiple times, for example after sending the scaling command at each time, the operation interface will be scaled to 50% by taking the size of the current interface as reference, or be scaled in the reverse direction.

In the above-mentioned technical solution, there are multiple preset scaling degrees, and the multiple preset scaling degrees are mutually correlated, then the scaling processing unit 102 further includes: a real-time proportion acquiring subunit 1024, configured to acquire the real-time scaling degree of the current interface; the interface processing subunit 1022 is further configured to select the preset scaling degree correlated with the real-time scaling degree according to the real-time scaling degree of the current interface and perform the scaling processing on the current interface.

In the technical solution, when sending the scaling command at each time, the operation interface of the terminal 100 is subjected to once scaling processing, for example, it is preset to be scaled to 75% at the first time, scaled to 50% at the second time and scaled to 30% at the third time, and the like, if the size of the current interface of the operation interface is 50% of the original size, the current interface is scaled to 30% or 75% when being scaled again.

In the above-mentioned technical solution, the scaling processing unit 102 further includes: a moving distance detecting subunit 1026, configured to detect the moving distance of the single-point touch track; the interface processing subunit 1022 is further configured to perform the scaling processing on the current interface according to the moving distance, wherein the scaling degree of the current interface is directly proportional to the moving distance.

In the technical solution, the longer the moving distance of the single-point touch track is, the larger the proportion at which the user hopes to perform the scaling processing on the operation interface is. The scaling degree may be correlated with the moving distance to achieve limitless scaling, in order to improve the user experience.

In the above-mentioned technical solution, the scaling processing unit 102 further includes: a display distance detecting subunit 1028, configured to detect the display distance between the display contents of the current interface and the bottom end point; the interface processing subunit 1022 is further configured to set the scaling degree of the display contents according to the display distance.

In the above-mentioned technical solution, when the interface processing subunit 1022 sets the scaling degree, the scaling degree is inversely proportional to the display distance.

In the technical solution, it is possible to make the display distance to the bottom end point be inversely proportional to the scaling degree of the corresponding display contents, so that the content at the edge of the coverage of the operating hand is always the maximum, to facilitate the operation of the user, since the user does not need to operate the content closer to the bottom end point temporarily, the content is scaled smaller, thus more contents may be held within the coverage of the operating hand, and the user is easier to move the contents beyond the coverage into the coverage.

In the above-mentioned technical solution, the terminal further includes: an area setting unit 112, configured to set a single-handed touch area on the current interface; and the scaling processing unit 102 is further configured to perform the scaling processing on the display contents within the single-handed touch area in the current interface.

In the above-mentioned technical solution, the display contents include out-of-area contents beyond the single-handed touch area and in-area contents within the single-handed touch area, and then, the scaling processing unit 102 is further configured to perform the scaling processing on the part of the out-of-area contents entering the single-handed touch area, under the condition that the out-of-area contents enter the single-handed touch area with the scaling of the in-area contents.

In the technical solution, all display contents may be scaled down, or merely the contents within the coverage may be scaled down, when the contents within the coverage are scaled down, corresponding contents beyond the coverage enter the coverage and will be scaled down according to the down-scaling rule. By adopting the solution, the original sizes of the contents beyond the coverage may be kept for convenience in viewing and reading.

In the above-mentioned technical solution, the area setting unit 112 includes: a track detecting subunit 1120, configured to detect a boundary track drawn on the current interface of the terminal 100 at a setting state; an area processing subunit 1122, configured to set the part below the boundary track on the current interface as the single-handed touch area.

In the technical solution, the user may set the size of the single-handed touch area by himself, specifically, when the terminal 100 enters the corresponding setting state, a boundary track is drawn on the terminal interface, if the boundary track is a closed shape, for example, a circle, the circle is set as the single-handed touch area; if the boundary track is a line segment crossing with the left and right sides of the terminal screen, an area formed by the line segment, the two crossed side edges and a third side edge below the line segment is set as the single-handed touch area.

In the above-mentioned technical solution, the area setting unit 112 includes: a touch point acquiring subunit 1124, configured to acquire the first touch point of the single-point touch track when detecting the single-point touch track; an area processing subunit 1122, configured to set an arc surface formed on the current interface as the single-handed touch area, wherein the bottom end point is used as a circle center, and the connecting line segment of the first touch point and the bottom end point is used as a radius.

In the technical solution, the user may set the single-handed touch area according to the operation coverage area corresponding to the thumb of his own operating hand, for facilitating the operation of the user.

In the above-mentioned technical solution, the terminal further includes: a widget acquiring unit 114, configured to acquire an operation widget on the current interface after detecting the single-point touch track; a widget arranging unit 116, configured to rearrange the operation widget in the single-handed touch area.

In the technical solution, since the shape of the operation interface could not be completely matched with the shape of the single-handed touch area, the scaled operation interface could not fill all display area of the single-handed touch area, such that the display interface of the scaled operation interface is too small, and the display area of the single-handed touch area is not completely utilized; by rearranging the operation widget in the single-handed touch area, the display area of the single-handed touch area may be used as much as possible, thus increasing the display area of the operation widget to facilitate the user operation and avoid wrong click.

In the above-mentioned technical solution, the scaling processing unit 102 is further configured to recover the current interface to the original display proportion according to a received recovery command after completing the scaling processing of the current interface.

In the technical solution, after the operation is completed, the display proportion of the current interface will be recovered.

In the above-mentioned technical solution, the process of the terminal 100 for generating the recovery command includes at least one of the following or the combination thereof: an operation command is not received within a preset time threshold of the current interface, the operation widget on the current interface receives the operation command, and an icon displayed on the current interface is triggered.

Fig.2 shows a flowchart of an interface operation management method according to an embodiment of the present invention.

As shown in Fig.2, the interface operation management method according to the embodiment of the present invention includes: step 202, performing, by a terminal, scaling processing on a current interface towards an appointed scaling direction according to a received scaling instruction.

In the technical solution, when the operation interface of the terminal is large, the user could not hold or operate the terminal by the single hand, particularly when holding the terminal on the single hand and operating the same through the thumb, the interface may be scaled within a range capable of being operated by the thumb, in order to achieve single-handed holding and operation. In order to facilitate the operation of the user, under a preferable solution, the scaling direction of the operation interface should be the holding hand direction of the user, for example, when the user holds the terminal on the right hand, the interface is scaled towards the lower right of the screen.

In the above-mentioned technical solution, the interface operation management method further includes: judging whether the current interface is a preset scalable interface, if so, performing the scaling processing, if not, performing no processing. In the technical solution, different interfaces may be preset by a manufacturer or the user, such that some interfaces needing to be scaled may be scaled and other interfaces could not be scaled, in order to prevent misoperation from affecting the operation experience of the user.

In the above-mentioned technical solution, the interface operation management method further includes: the scaling instruction corresponds to a single-point touch track sensed by the terminal; if the terminal detects the single-point touch track matched with a preset gesture shape, performing the scaling processing on the current interface.

In the technical solution, when using the holding hand to operate the terminal interface, since the user is used to using the thumb of the hand to operate, when scaling the interface, it is the best for the user to draw the single-point touch track through the thumb to achieve the scaling processing of the interface.

In the above-mentioned technical solution, the interface operation management method further includes: judging whether the operating hand drawing the single-point touch track is the left hand or the right hand of the user, and determining the scaling direction according to the judging result.

In the technical solution, when the user holds the terminal on the single hand and uses the thumb of the hand to operate, an arc surface taking the held corner of the terminal as a circle center will be generally formed, this is the coverage capable of being operated by the thumb, and after the interface is scaled to the arc surface, the single-handed operation of the user is facilitated. Thus, by judging the holding hand of the user, the operation interface is convenient to be scaled within the operation coverage of the thumb of the holding hand, in order to achieve the single-handed holding and operation of the user.

In the above-mentioned technical solution, the process of judging the operating hand includes: detecting dynamic parameters on the surrounding of the terminal through a detecting device arranged on the terminal, and judging according to the dynamic parameters.

In the technical solution, the dynamic parameters herein include, for example, temperature, humidity, brightness and the like, by arranging corresponding devices on the front surface, the side surface, the back surface and the like of the terminal, such as a temperature sensor, a humidity sensor, a brightness sensor, a distance sensor and the like, the above-mentioned dynamic parameters may be acquired in real time, so as to judge the current holding hand or operating hand of the user.

In the above-mentioned technical solution, the process of judging the operating hand includes: displaying a selection menu on the current interface after detecting the single-point touch track, and judging according to a received selection command.

In the technical solution, a corresponding inquiry menu may also be activated by the single-point touch track of the user, and then, the user clicks to select a corresponding menu option to determine the current operating hand.

In the above-mentioned technical solution, the process of judging the operating hand includes: detecting the moving direction of the single-point touch track, and judging according to the moving direction.

In the technical solution, the user will generally express his own operation intention on a corresponding operation action, for example, when hoping to scale the operation interface along a certain direction, the user will generally draw the single-point touch track towards the direction, when hoping to use the thumb of the operating hand to operate, the user will generally move the interface towards the operation coverage of the thumb, thus by detecting the moving direction of the single-point touch track, the operating hand of the user may be judged.

In the above-mentioned technical solution, the moving direction is acquired according to the starting point position and the ending point position of the single-point touch track.

In the technical solution, when the user draws the single-point touch track, the track is generally substandard and will be subjected to such conditions as bending and the like, thus causing the terminal to fail to identify the operation intention of the user; however, the general operation direction of the user is generally correct, thus as long as the starting point and the ending point of the single-point touch track are acquired, the general direction of the track may be known, to judge the operation intention and the operating hand of the user.

In the above-mentioned technical solution, the process of performing the scaling processing on the current interface includes: fixing a bottom end point located in the scaling direction on the current interface, and scaling the current interface towards the position where the bottom end point is located.

In the technical solution, the shape of the terminal interface and the shape of the screen are rectangles, each of which includes four end points, when holding the terminal, the user often holds one end point therein, the end point is the bottom end point, and the operation interface may be scaled within the operation coverage of the thumb of the operating hand by simply scaling the same towards the bottom end point.

In the above-mentioned technical solution, a preset scaling degree is stored in the terminal, and the scaling processing is performed on the current interface according to the preset scaling degree.

In the technical solution, once the user draws a single-point touch track, it is equal to send the scaling command for one time, and then, under one condition, the user may only send the scaling command for one time, for example, may only scale the operation interface from an original size to 50%, or scale in the reverse direction; under another condition, the user may send the scaling command for multiple times, for example after sending the scaling command at each time, the operation interface will be scaled to 50% by taking the size of the current interface as reference, or be scaled in the reverse direction.

In the above-mentioned technical solution, there are multiple preset scaling degrees, and the multiple preset scaling degrees are mutually correlated, then the preset scaling degree correlated with the real-time scaling degree is selected according to the real-time scaling degree of the current interface to perform the scaling processing on the current interface.

In the technical solution, when sending the scaling command at each time, the operation interface of the terminal is subjected to once scaling processing, for example, it is preset to be scaled to 75% at the first time, scaled to 50% at the second time and scaled to 30% at the third time, and the like, if the size of the current interface of the operation interface is 50% of the original size, the current interface is scaled to 30% or 75% when being scaled again.

In the above-mentioned technical solution, the moving distance of the single-point touch track is detected, and the scaling processing is performed on the current interface according to the moving distance, wherein the scaling degree of the current interface is directly proportional to the moving distance.

In the technical solution, the longer the moving distance of the single-point touch track is, the larger the proportion at which the user hopes to perform the scaling processing on the operation interface is. The scaling degree may be correlated with the moving distance to achieve limitless scaling, in order to improve the user experience.

In the above-mentioned technical solution, the interface operation management method further includes: detecting the display distance between the display contents of the current interface and the bottom end point, and setting the scaling degree of the display contents according to the display distance.

In the above-mentioned technical solution, the interface operation management method further includes: the scaling degree is inversely proportional to the display distance.

In the technical solution, it is possible to make the display distance to the bottom end point be inversely proportional to the scaling degree of the corresponding display contents, so that the content at the edge of the coverage of the operating hand is always the maximum, to facilitate the operation of the user, since the user does not need to operate the content closer to the bottom end point temporarily, the content is scaled smaller, thus more contents may be held within the coverage of the operating hand, and the user is easier to move the contents beyond the coverage into the coverage.

In the above-mentioned technical solution, a single-handed touch area is set on the current interface, and the scaling processing is performed on the display contents within the single-handed touch area in the current interface.

In the above-mentioned technical solution, the display contents include out-of-area contents beyond the single-handed touch area and in-area contents within the single-handed touch area, if the out-of-area contents enter the single-handed touch area with the scaling of the in-area contents, the scaling processing is performed on the part of the out-of-area contents entering the single-handed touch area.

In the technical solution, all display contents may be scaled down, or merely the contents within the coverage may be scaled down, when the contents within the coverage are scaled down, corresponding contents beyond the coverage enter the coverage and will be scaled down according to the down-scaling rule. By adopting the solution, the original sizes of the contents beyond the coverage may be kept for convenience in viewing and reading.

In the above-mentioned technical solution, the process of setting the single-handed touch area includes: detecting a boundary track drawn on the current interface of the terminal at a setting state, and setting the part below the boundary track on the current interface as the single-handed touch area.

In the technical solution, the user may set the size of the single-handed touch area by himself, specifically, when the terminal enters the corresponding setting state, a boundary track is drawn on the terminal interface, if the boundary track is a closed shape, for example, a circle, the circle is set as the single-handed touch area; if the boundary track is a line segment crossing with the left and right sides of the terminal screen, an area formed by the line segment, the two crossed side edges and a third side edge below the line segment is set as the single-handed touch area.

In the above-mentioned technical solution, the process of setting the single-handed touch area includes: acquiring the first touch point of the single-point touch track when detecting the single-point touch track; setting an arc surface formed on the current interface as the single-handed touch area, wherein the bottom end point is used as a circle center, and the connecting line segment of the first touch point and the bottom end point is used as a radius.

In the technical solution, the user may set the single-handed touch area according to the operation coverage area corresponding to the thumb of his own operating hand, for facilitating the operation of the user.

In the above-mentioned technical solution, the interface operation management method further includes: after detecting the single-point touch track, rearranging an operation widget on the current interface in the single-handed touch area.

In the technical solution, since the shape of the operation interface could not be completely matched with the shape of the single-handed touch area, the scaled operation interface could not fill all display area of the single-handed touch area, such that the display interface of the scaled operation interface is too small, and the display area of the single-handed touch area is not completely utilized; by rearranging the operation widget in the single-handed touch area, the display area of the single-handed touch area may be used as much as possible, thus increasing the display area of the operation widget to facilitate the user operation and avoid wrong click.

In the above-mentioned technical solution, the interface operation management method further includes: after completing the scaling processing of the current interface, recovering the current interface to the original display proportion according to a received recovery command.

In the technical solution, after the operation is completed, the display proportion of the current interface will be recovered.

In the above-mentioned technical solution, the process of generating the recovery command includes at least one of the following or the combination thereof: an operation command is not received within a preset time threshold of the current interface, the operation widget on the current interface receives the operation command, and an icon displayed on the current interface is triggered.

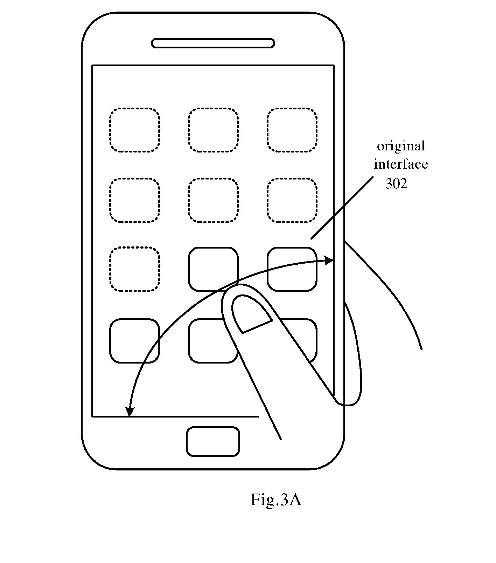

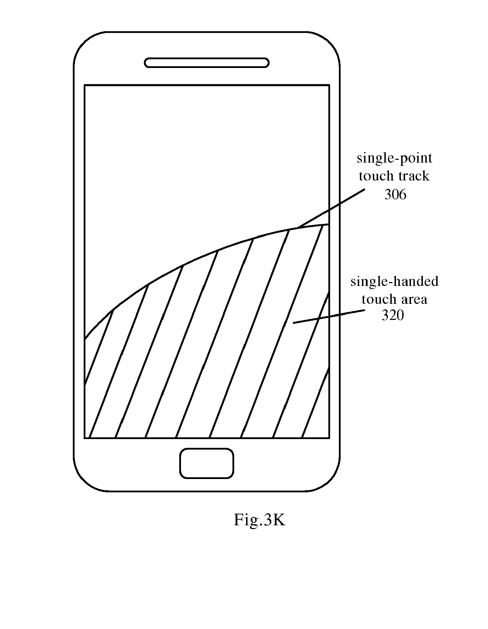

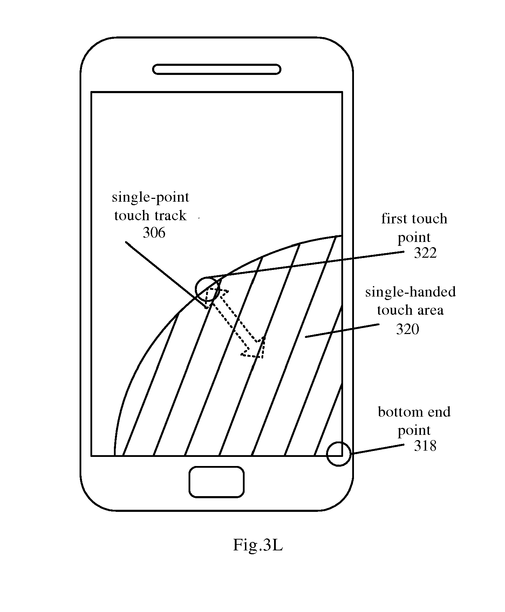

Fig.3A to Fig.3M show a schematic diagram of an operation terminal interface according to an embodiment of the present invention.

As shown in Fig.3A, when the user operates the terminal, if the screen of the terminal is large, the corresponding operation interface is large, resulting in that the user could not use a single hand (particularly using the thumb of the hand) to operate the operation interface of the terminal when holding the terminal on the hand.

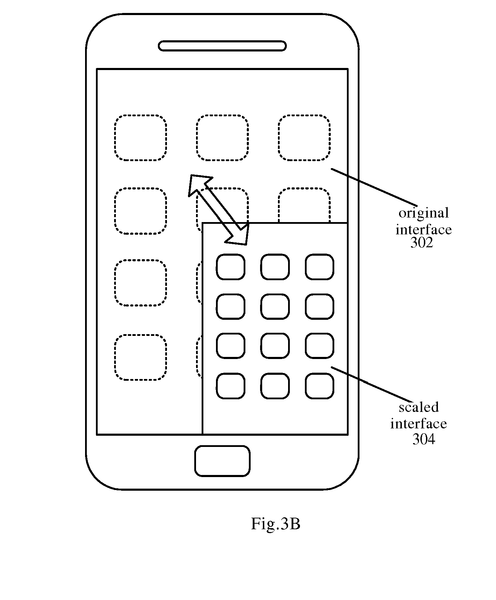

Therefore, scaling processing may be performed on an original interface 302 in Fig.3A, to scale the interface or an operation widget in the interface within the area range capable of being covered by the thumb (or other fingers used for operation) of the user, in order to enable the user to operate the interface by using the operating hand holding the terminal. Specifically, for example, the original interface 302 may be scaled to a scaled interface 304 as shown in Fig.3B.

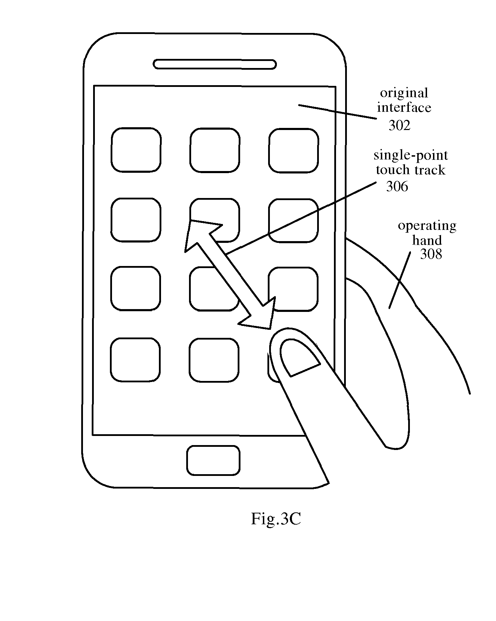

In specific operation, as shown in Fig.3C, while holding the terminal through the operating hand 308, the user may use a finger of the operating hand 308 to draw a single-point touch track 306 on the original interface 302, an operation effect as shown in Fig.3B may be generated, and the original interface 302 is subjected to the scaling processing.

In order to facilitate the operation of the user, if the user holds the terminal on the right hand, it is the best to scale the original interface 302 towards the lower right of the terminal and close to a position towards the operating hand 308, if the user holds the terminal on the left hand, it is the best to scale the original interface to the lower left of the terminal. Then, in order to distinguish whether the current operating hand 308 is the left hand or the right hand, multiple manners may be adopted: In a first manner, a temperature sensor, a humidity sensor, a light sensor, a distance sensor and the like may be arranged on the front surface, side surface, back surface and the like of the terminal, to identify the operating hand 308 of the user, and then, the original interface 302 is scaled to a corresponding end point.

In a second manner, the drawn single-point touch track 306 may be analyzed and judged, for example, based on use psychology, the user will generally drag the original interface 302 towards the position where the operating hand 308 is located, thus when the operating hand 308 is the right hand, the single-point touch track 306 formed when scaling down the original interface 302 should point from upper left to lower right, at this time, the original interface 302 is subjected to the scaling processing according to the manner as shown in Fig.3B.

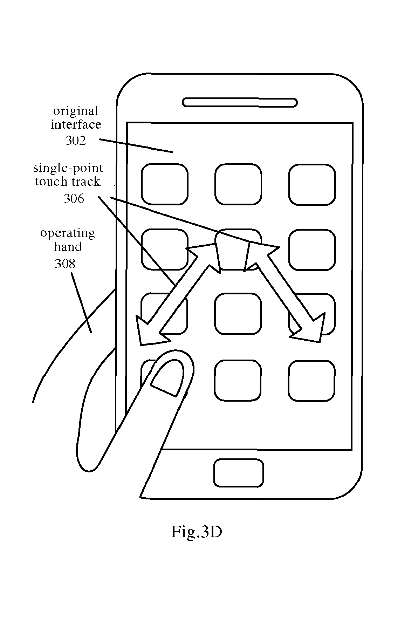

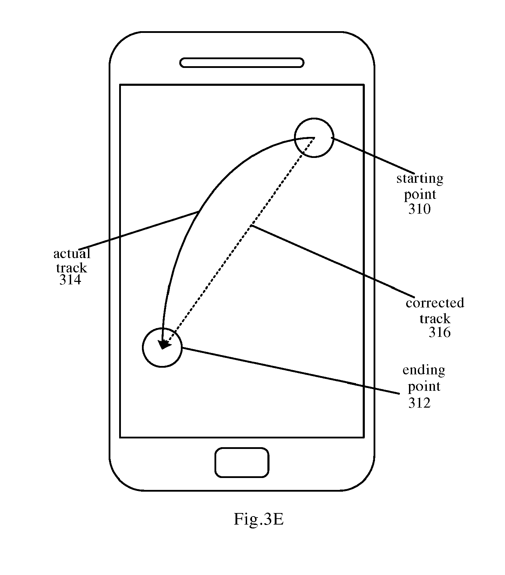

Aiming at the two above-mentioned conditions, if the first condition is adopted, when the operating hand 308 as shown in Fig.3D is the left hand, no matter which single-point touch track 306 shown in the figure is drawn on the original interface 302, the scaling processing should be performed according to the manner as shown in Fig.3E, and the original interface 302 is scaled to a scaled interface 304; if the second condition is adopted, when the single-point touch track 306 at the left side in Fig.3D is adopted, the scaling processing is performed according to the manner as shown in Fig.3E, and when the single-point touch track 306 at the right side in Fig.3D is adopted, the scaling processing is performed according to the manner as shown in Fig.3B.

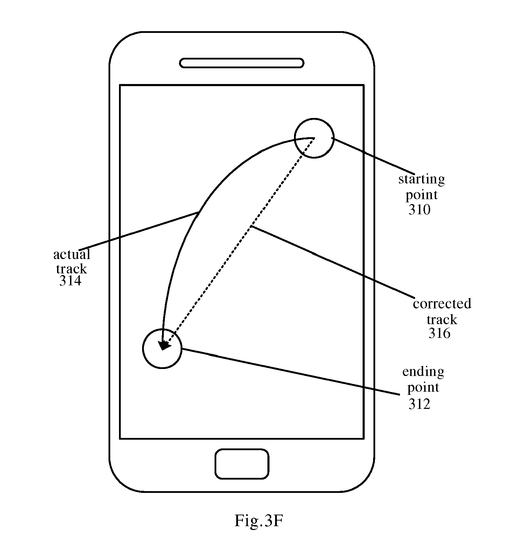

In the third manner, judgment may be performed according to the end point of the track drawn by the user, specifically as shown in Fig.3F, after the user draws an actual track 314 on the terminal interface, since the track drawn by the user is often substandard, if the second manner is adopted, if the actual track 314 is subjected to such conditions as bending and the like, identification could not be performed, even wrong judgment is caused to affect the use experience of the user. Therefore, the starting point 310 and the ending point 312 of the actual track 314 are acquired, a corrected track 316 from the starting point 310 to the ending point 312 is formed, and then the judgment is performed according to the corrected track 316.

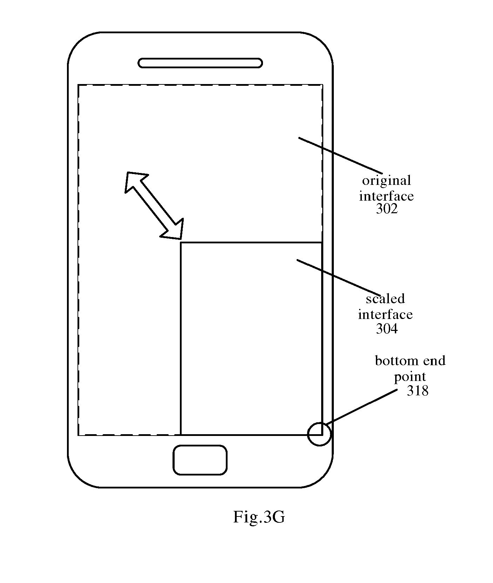

In the above-mentioned technical solutions, for the scaling processing of the original interface 302, specifically, as shown in Fig.3G, if the user holds the terminal on the right hand, the lower right corner of the terminal is used as a bottom end point 318, the bottom end point 318 is fixed, and the original interface 302 is scaled towards the direction of the bottom end point 318 to acquire the scaled interface 304.

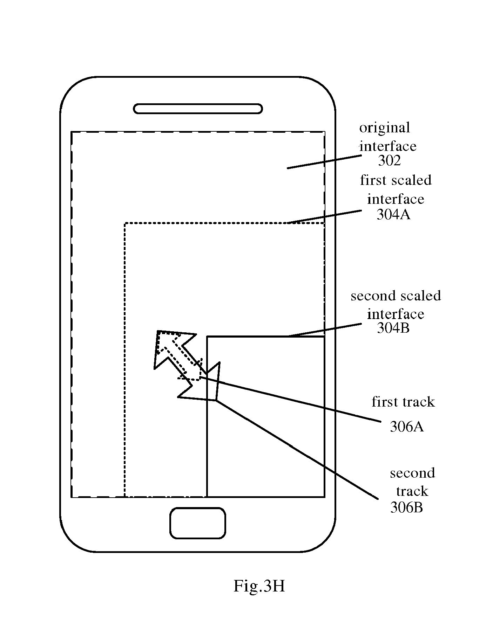

In the scaling process of the original interface 302, as shown in Fig.3H, whether the original interface 302 is subjected to the scaling processing is ensured by whether the user drags on the original interface 302, specifically, for example, when the track drawn by the user is a first track 306A, the original interface 302 is scaled to a first scaled interface 304A, and the scaling degree is a, when the track drawn by the user is a second track 306B, the original interface 302 is scaled to a second scaled interface 304B, and the scaling degree is b, wherein the scaling degree is directly proportional to the distance of the track.

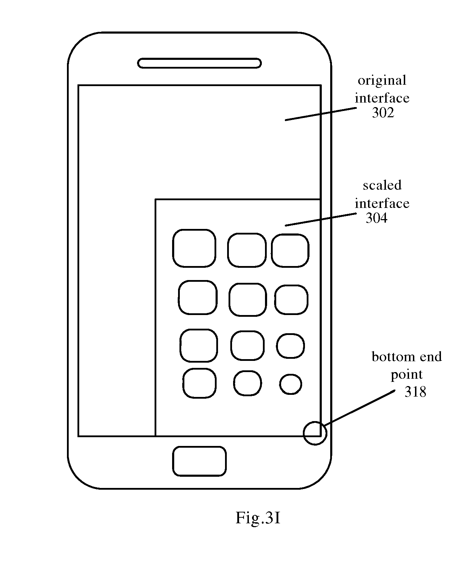

As shown in Fig.3I, the scaling degree may also be controlled according to the distance between the display content or the operation widget in the original interface 302 and the bottom end point 318, specifically, it is ensured that the scaling degree of the display content or the operation widget farther away from the bottom end point 318 is smaller, in order to ensure that an operation object with a larger display proportion may be acquired at the edge close to the coverage area of the thumb of the operating hand of the user, thus misoperation is avoided, and the user does not need to bend the finger, thus facilitating the operation of the user.

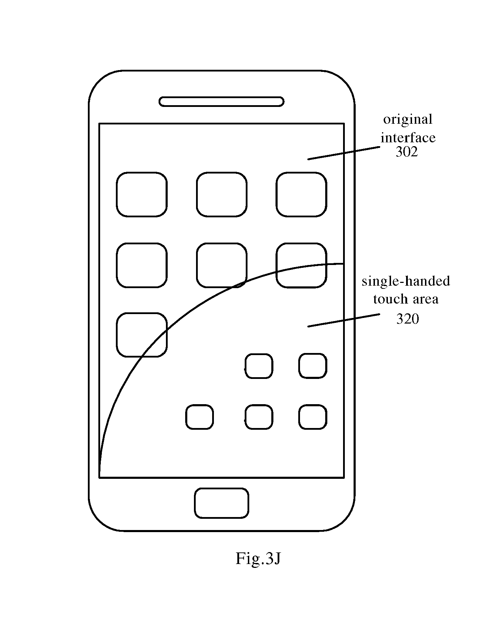

In addition, the terminal may also be provided with a single-handed touch area 320 as shown in Fig.3J, only the display content or the operation widget within the single-handed touch area 320 is subjected to the scaling processing, and the scaling processing is not performed beyond the single-handed touch area 320, so as to provide convenience for viewing the contents beyond the single-handed touch area 320.

Then, the position, size and the like of the single-handed touch area 320 may also be set by the user, specifically, the following several manners may be adopted:
In a first manner, the user regulates the terminal to a setting mode, and then draws the single-point touch track 306 on the terminal interface, particularly, the single-point touch track 306 has two crossing points with at least one of the four side edges of the terminal, then the area below the single-point touch track 306 on the terminal interface is set as the single-handed touch area 320.

In a second manner, when the user draws the single-point touch track 306 on the terminal interface, a first touch point 322 of the track and the terminal screen may be acquired at the setting mode or a normal operation mode, meanwhile, the terminal screen has four end points, the bottom end point 318 below the single-point touch track 306 is acquired, the bottom end point 318 is located in the moving direction pointed by the single-point touch track 306, then an arc surface formed with the terminal interface is set as the single-handed touch area 320, wherein the bottom end point 318 is used as a circle center, and the distance between the bottom end point 318 and the first touch point 322 is used as a radius.

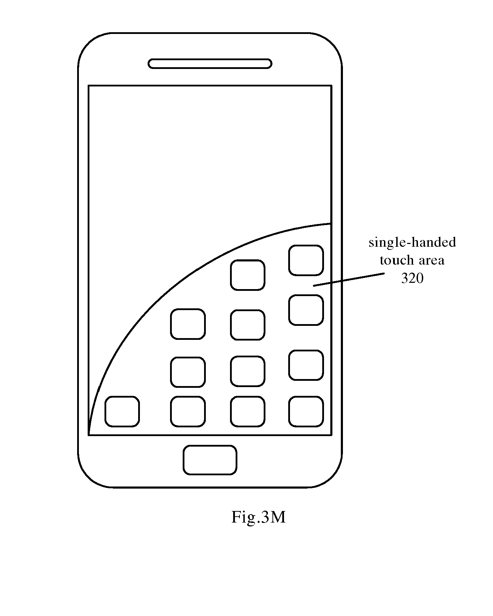

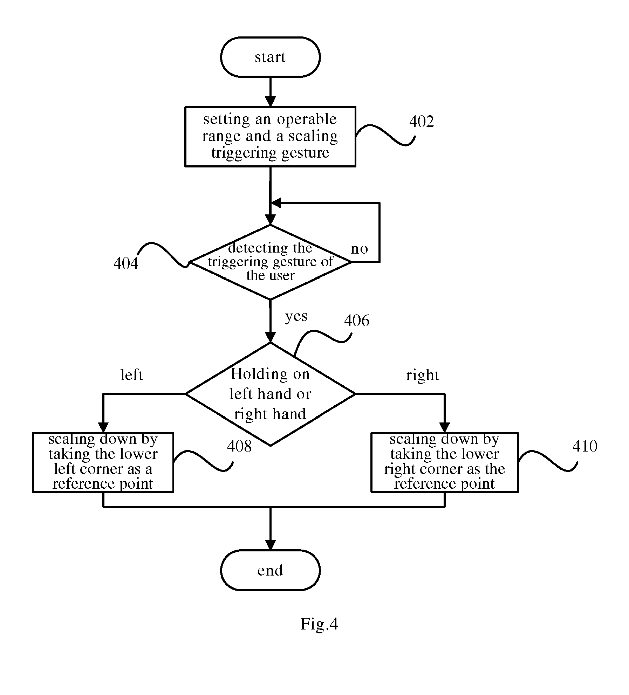

In addition, if the original interface 302 is directly scaled to the single-handed touch area 320 according to the original interface display proportion, the single-handed touch area 320 could not be fully utilized, and in the scaled interface, the operation widget is small to bring inconvenience to the operation of the user, thus the operation widget of the original interface 302, as shown in Fig.3M, may be rearranged into the single-handed touch area 320, thus both achieving the scaling processing and fully utilizing the display area in the single-handed touch area 320, in order to facilitate the operation of the user and reduce the misoperation frequency. Fig.4 shows a flowchart of terminal interface operation in an embodiment of the present invention.

As shown in Fig.4, the flow of the terminal interface operation in the embodiment of the present invention is as follows:
step 402, setting an operable range of a finger when the user holds the terminal on a single hand and a triggering gesture when performing scaling operation;
step 404, judging whether the triggering gesture of the user is detected, if so, entering step 406, if not, continuing to judge;
step 406, judging whether the user holds the terminal on the left hand or the right hand;
step 408, if the user holds the terminal on the left hand, scaling the current terminal interface by taking the lower left corner as a reference point, namely, fixing the lower left corner and scaling the other contents of the interface towards the point; step 410, if the user holds the terminal on the right hand, scaling the current terminal interface by taking the lower right corner as the reference point.

The technical solutions of the present invention have been described above in combination with the accompanying drawings, considering that in related art, single-handed holding and operation on the terminal interface are difficult to achieve, thus the present invention provides a terminal and an interface operation management method, which may be used for performing scaling processing on the operation interface of the terminal, to facilitate the user to operate the contents of the interface through a single hand.

The foregoing descriptions are merely preferred embodiments of the present invention, rather than limiting the present invention, and those skilled in the art may make various changes and variations to the present invention. Any modifications, equivalent substitutions, improvements and the like, made within the spirit and principle of the present invention, shall fall within the protection scope of the present invention.

## Claims

1. A terminal, comprising:
a scaling processing unit, configured to perform scaling processing on a current interface towards an appointed scaling direction according to a received scaling instruction.

2. The terminal of claim 1, wherein the scaling instruction corresponds to a sensed single-point touch track, then the terminal further comprises:
a touch sensing unit, configured to generate the single-point touch track according to a sensed touch action;
the scaling processing unit is further configured to perform the scaling processing on the current interface under the condition that the single-point touch track is matched with a preset gesture shape.

3. The terminal of claim 2, further comprising:
an operating hand judging unit, configured to judge whether the operating hand drawing the single-point touch track is the left hand or the right hand of the user;
a direction determining unit, configured to determine the scaling direction according to the judging result of the operating hand judging unit.

4. The terminal of claim 3, wherein the operating hand judging unit comprises:
a moving direction detecting subunit, configured to detect the moving direction of the single-point touch track;
a judging subunit, configured to judge the operating hand according to the moving direction.

5. The terminal of claim 3, wherein the scaling processing unit comprises:
an end point processing subunit, configured to fix a bottom end point located in the scaling direction on the current interface;
an interface processing subunit, configured to scale the current interface towards the position where the bottom end point is located.

6. The terminal of claim 5, wherein the scaling processing unit further comprises:
a moving distance detecting subunit, configured to detect the moving distance of the single-point touch track;
the interface processing subunit is further configured to perform the scaling processing on the current interface according to the moving distance, wherein the scaling degree of the current interface is directly proportional to the moving distance.

7. The terminal of claim 6, wherein the scaling processing unit further comprises:
a display distance detecting subunit, configured to detect the display distance between the display contents of the current interface and the bottom end point;
the interface processing subunit is further configured to set the scaling degree of the display contents according to the display distance.

8. The terminal of claim 7, wherein when the interface processing subunit sets the scaling degree, the scaling degree is inversely proportional to the display distance.

9. The terminal of claim 6, further comprising:
an area setting unit, configured to set a single-handed touch area on the current interface; and
the scaling processing unit is further configured to perform the scaling processing on the display contents within the single-handed touch area in the current interface.

10. The terminal of claim 9, wherein the display contents comprise out-of-area contents beyond the single-handed touch area and in-area contents within the single-handed touch area, then, the scaling processing unit is further configured to:
perform the scaling processing on the part of the out-of-area contents entering the single-handed touch area, under the condition that the out-of-area contents enter the single-handed touch area with the scaling of the in-area contents.

11. The terminal of claim 9, wherein the area setting unit comprises:
a track detecting subunit, configured to detect a boundary track drawn on the current interface of the terminal at a setting state;
an area processing subunit, configured to set the part below the boundary track on the current interface as the single-handed touch area.

12. The terminal of claim 9, wherein the area setting unit comprises:
a touch point acquiring subunit, configured to acquire the first touch point of the single-point touch track when detecting the single-point touch track;
an area processing subunit, configured to set an arc surface formed on the current interface as the single-handed touch area, wherein the bottom end point is used as a circle center, and the connecting line segment of the first touch point and the bottom end point is used as a radius.

13. The terminal of claim 9, further comprising:
a widget acquiring unit, configured to acquire an operation widget on the current interface after detecting the single-point touch track;
a widget arranging unit, configured to rearrange the operation widget in the single-handed touch area.

14. The terminal of any of claims 1-13, wherein the scaling processing unit is further configured to:
recover the current interface to the original display proportion according to a received recovery command after completing the scaling processing of the current interface.

15. The terminal of claim 14, wherein the process of the terminal for generating the recovery command comprises at least one of the following or the combination thereof:
an operation command is not received within a preset time threshold of the current interface, the operation widget on the current interface receives the operation command, and an icon displayed on the current interface is triggered.

16. An interface operation management method, comprising:
performing, by a terminal, scaling processing on a current interface towards an appointed scaling direction according to a received scaling instruction.

17. The interface operation management method of claim 16, further comprising:
the scaling instruction corresponds to a single-point touch track sensed by the terminal;
if the terminal detects the single-point touch track matched with a preset gesture shape, performing the scaling processing on the current interface.

18. The interface operation management method of claim 17, further comprising:
judging whether the operating hand drawing the single-point touch track is the left hand or the right hand of the user, and determining the scaling direction according to the judging result.

19. The interface operation management method of claim 18, wherein the process of judging the operating hand comprises:
detecting the moving direction of the single-point touch track, and judging according to the moving direction.

20. The interface operation management method of claim 18, wherein the process of performing the scaling processing on the current interface comprises:
fixing a bottom end point located in the scaling direction on the current interface,
and scaling the current interface towards the position where the bottom end point is located.

21. The interface operation management method of claim 20, wherein the moving distance of the single-point touch track is detected, and the scaling processing is performed on the current interface according to the moving distance, wherein the scaling degree of the current interface is directly proportional to the moving distance.

22. The interface operation management method of claim 21, further comprising:
detecting the display distance between the display contents of the current interface and the bottom end point, and setting the scaling degree of the display contents according to the display distance.

23. The interface operation management method of claim 22, further comprising:
the scaling degree is inversely proportional to the display distance.

24. The interface operation management method of claim 21, wherein a single-handed touch area is set on the current interface, and the scaling processing is performed on the display contents within the single-handed touch area in the current interface.

25. The interface operation management method of claim 24, wherein the display contents comprise out-of-area contents beyond the single-handed touch area and in-area contents within the single-handed touch area, if the out-of-area contents enter the single-handed touch area with the scaling of the in-area contents, the scaling processing is performed on the part of the out-of-area contents entering the single-handed touch area.

26. The interface operation management method of claim 24, wherein the process of setting the single-handed touch area comprises:
detecting a boundary track drawn on the current interface of the terminal at a setting state, and setting the part below the boundary track on the current interface as the single-handed touch area.

27. The interface operation management method of claim 24, wherein the process of setting the single-handed touch area comprises:
acquiring the first touch point of the single-point touch track when detecting the single-point touch track;
setting an arc surface formed on the current interface as the single-handed touch area, wherein the bottom end point is used as a circle center, and the connecting line segment of the first touch point and the bottom end point is used as a radius.

28. The interface operation management method of claim 24, further comprising:
after detecting the single-point touch track, rearranging an operation widget on the current interface in the single-handed touch area.

29. The interface operation management method of any of claims 16-28, further comprising:
after completing the scaling processing of the current interface, recovering the current interface to the original display proportion according to a received recovery command.

30. The interface operation management method of claim 29, wherein the process of generating the recovery command comprises at least one of the following or the combination thereof:
an operation command is not received within a preset time threshold of the current interface, the operation widget on the current interface receives the operation command, and an icon displayed on the current interface is triggered.
